Europäisches Patentamt

European Patent Office

Office européen des brevets

(11) Veröffentlichungsnummer : **0 039 433**
**B1**

(12) **EUROPÄISCHE PATENTSCHRIFT**

(45) Veröffentlichungstag der Patentschrift :
22.06.83

(21) Anmeldenummer : **81102898.4**

(22) Anmeldetag : **15.04.81**

(51) Int. Cl.³ : **B 29 J   5/08**, B 29 F   3/08

(54) Vorrichtung zum Aushärten stranggepresster Körper.

(30) Priorität : **02.05.80 DE 3016926**

(43) Veröffentlichungstag der Anmeldung :
**11.11.81 Patentblatt 81/45**

(45) Bekanntmachung des Hinweises auf die Patenterteilung : **22.06.83 Patentblatt 83/25**

(84) Benannte Vertragsstaaten :
**AT BE CH DE FR GB IT LI LU NL SE**

(56) Entgegenhaltungen :
**CH A 292 879**
**DE A 2 220 553**
**DE A 2 332 367**
**DE C 838 954**
**GB A 761 228**
**US A 3 992 242**

(73) Patentinhaber : **Heggenstaller, Anton**
**Mühlenstrasse 9**
**D-8891 Unterbernbach (DE)**

(72) Erfinder : **Peer, Günter, Dr.**
**Parkstrasse 3**
**D-8904 Friedberg-Stätzling (DE)**

(74) Vertreter : **Ernicke, Hans-Dieter, Dipl.-Ing.**
**Schwibbogenplatz 2b**
**D-8900 Augsburg (DE)**

EP 0 039 433 B1

Vorrichtung zum Aushärten stranggepreßter Körper

Die Erfindung betrifft eine Vorrichtung zum Aushärten stranggepreßter Körper aus vornehmlich pflanzlichem, mit einem Bindemittel gemischten Material, z. B. Abfallprodukte der Holzindustrie, bestehend aus einem beheizbaren, im Anschluß an eine Strangpreßdüse einer Kolbenstrangpresse angeordneten, dem Düsenquerschnitt anpaßbaren und aus mehreren, sich nicht berührenden Wandabschnitten gebildeten Aushärtekanal, wobei mindestens zwei an gegenüberliegenden Seiten des Stranges angeordnete Wandabschnitte quer zur Strangvorschubrichtung mittels Spannelementen oder dgl. bewegbar und von beiden Seiten her gegen den Strang anpreßbar sind.

Bei einer derartigen Anordnung gem. der GB-PS 761 228 sind die beweglichen Wandabschnitte durch Kupplungsstangen mit den festen Teilen des Aushärtekanals verbunden, so daß, je nach der vorhandenen Reibung, eine Anpressung der Abschnitte bis zu einem maximalen Wert der Anpreßkraft erfolgen kann. Diese sich so ergebende Anpreß- oder Abstützkraft der Wandabschnitte ist in vielen Fällen nicht optimal und oft nicht ausreichend. Denn bei Verarbeitung von unterschiedlichem Material, insbesondere bei sehr inhomogener Materialzusammensetzung, ist ein sehr verschiedener Preßdruck in der Strangpresse erforderlich, um eine gewünschte, stets gleichmäßige Dichte der stranggepreßten Körper zu erreichen.

Ferner ist es bei einer Presse gem. der US-PS 3 992 242 bekannt, einen zwischen zwei Platten, deren Anpreßflächen jeweils gebildet werden durch parallel nebeneinander dicht anliegende Stangen mit rechteckigem Querschnitt, eingepreßten Materialstrang dadurch vorwärts zu schieben, daß die einzelnen Stangen zuerst jeweils einzeln nacheinander gegen und dann gemeinsam und gleichzeitig in Vorschubrichtung bewegt werden, so daß der Strang durch die Reibung mit den Stangen bei der gemeinsamen Bewegung in Vorschubrichtung mitgenommen wird. Diese bekannte Vorrichtung hat den Nachteil, daß ein definierter Preßdruck in Vorschubrichtung nicht eingestellt werden kann, und daß der Preßdruck quer zur Vorschubrichtung nicht so hoch sein darf, daß bei der Bewegung jeweils einer einzelnen Stange entgegen zur Vorschubrichtung keine Mitnahme erfolgt.

Aufgabe der Erfindung ist es daher, die eingangs genannte Vorrichtung so auszubilden, daß auch bei Verarbeitung von sehr unterschiedlichem Material stets ein je nach Materialart unterschiedlicher, jeweils optimaler, gewünschter Preßdruck in der Vorrichtung erreicht werden kann, um so stets eine gewünschte, gleichmäßige Dichte der stranggepreßten Körper zu erzielen.

Die Erfindung löst diese Aufgabe dadurch, daß die Wandabschnitte in und gegen Vorschubrichtung beweglich geführt sind, und daß an ihnen je ein Krafterzeuger angreift, der eine dem Preßhub entgegengerichtete Kraft auf die während des Preßhubs angepreßten Wandabschnitte überträgt, wobei die Kraft des Krafterzeugers steuerbar ist in Abhängigkeit vom Druck in der Strangpresse.

Beim Preßhub stützt sich also der gepreßte Strang fest an den angepreßten Wandabschnitten, auf die die Kraft des Krafterzeugers einwirkt, ab. Erst wenn der Druck im Preßzylinder der Strangpresse einen gewünschten Wert erreicht hat, wird die Abstützkraft der Wandabschnitte überwunden, und diese bewegen sich dann infolge ihrer Längsbeweglichkeit zusammen mit dem Strang in Vorschubrichtung. Nach Beendigung des Vorschubs wird der durch die Spannelemente bewirkte Anpreßdruck aufgehoben. Die Wandabschnitte werden hierdurch von dem Krafterzeuger in ihre Anfangsstellung zurückbewegt. Die auf die Wandabschnitte während des Preßhubs von dem Krafterzeuger übertragene Kraft kann mit an sich bekannten Steuer- und Regeleinrichtungen beispielsweise so gesteuert werden, daß sie, wenn der Preßdruck größer wird als ein bestimmter Sollwert (der wiederum einer bestimmten Dichte entspricht) entsprechend verringert wird und umgekehrt. Dies kann z. B. dadurch geschehen, daß in dem beispielsweise als hydraulischer Zylinder ausgebildeten Krafterzeuger der Druck entsprechend den jeweils gemessenen Abweichungen des Preßdruckes von dem Sollwert verringert oder vergrößert wird. Es läßt sich also erfindungsgemäß über die Regelung des Drucks eine gewünschte Dichte des gepreßten Strangs erreichen.

Die Wandabschnitte können auch bei der Erfindung entsprechend der Oberflächenform des gepreßten Stranges geformt sein. Bei zylindrischem Querschnitt des Stranges bilden die Wandabschnitte beispielsweise zwei Zylinderhalbschalen. Natürlich sind auch Anordnungen mit 3 oder mehreren Zylinderschalen denkbar, die jeweils einen entsprechenden Winkelbereich des Umfanges einschließen. Bei rechteckigem Querschnitt kann es genügen, wenn zwei gegenüberliegende Wandabschnitte gemäß der Erfindung anpreßbar und längsbeweglich ausgebildet sind, während in der Querdimension die Wandabschnitte fest angeordnet sind. Im Rahmen der Erfindung besteht jedoch auch die Möglichkeit, daß vier jeweils einander gegenüberliegende, beweglich geführte und gegeneinander anpreßbare Wandabschnitte ringsum einen Strangquerschnitt vorgesehen sind. In einer speziellen Ausführungsform der Erfindung ist vorgesehen, daß die Wandabschnitte über eine Rollenlagerung an den Spannelementen abgestützt sind.

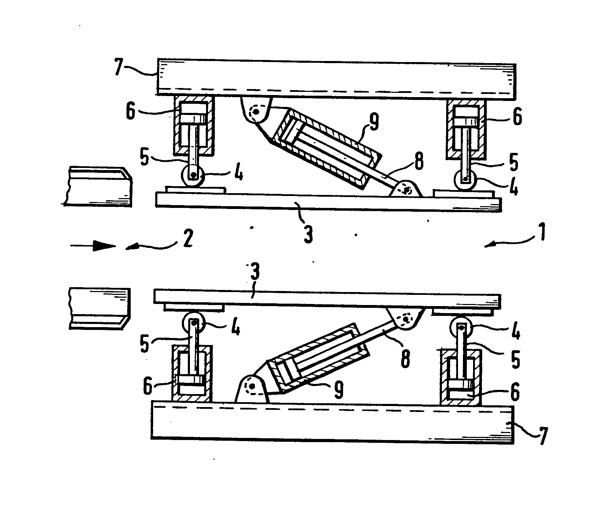

Die Erfindung ist beispielsweise und schematisch in der Zeichnung dargestellt. Diese zeigt eine Draufsicht auf zwei erfindungsgemäß ausgebildete Wandabschnitte eines Aushärtekanals 1, die in der Zeichenebene aufeinander zubewegbar sind. Die oberhalb und unterhalb der Zeichenebene befindlichen Wandabschnitte, die den Strangquerschnitt umschließen und entweder in der gleichen erfindungsgemäßen Weise ausgebildet oder fest angeordnet sein können, sind in der Zeichnung der Übersichtlichkeit und besseren Verständlichkeit wegen weggelassen.

Mit 2 ist schematisch die Austrittsöffnung einer Strangpreßdüse angedeutet, aus der Material in Pfeilrichtung, d. h. in Vorschubrichtung, durch den Aushärtekanal 1 gepreßt wird. Die Wandabschnitte 3 sind über Rollen 4 an Spannelementen 5 gelagert, die hier jeweils durch die Kolbenstange eines hydraulischen oder pneumatischen Zylinders 6 gebildet sind. Die Zylinder 6 sind in ortsfesten Ständern 7 zu beiden Seiten des Aushärtekanales 1 befestigt. Die Wandabschnitte 3 können somit durch Beaufschlagung der Zylinder 6 mit einem Druckmedium quer zur Vorschubrichtung von beiden Seiten her gegen den Strang angepreßt werden. An den Wandabschnitten 3 greift jeweils die Kolbenstange 8 eines ebenfalls als hydraulischer oder pneumatischer Zylinder ausgebildeten Krafterzeugers 9 an, der jeweils an dem Ständer 7 angelenkt ist.

Werden die Wandabschnitte 3 durch die Spannelemente 5 gegen den im Aushärtekanal befindlichen Strang angepreßt, so werden sie, wenn der Preßhub in Pfeilrichtung einsetzt, durch die an ihnen jeweils angelenkten Kolbenstangen 8 des in der Zeichnung gerade mit Druck beaufschlagten Krafterzeugers 9 festgehalten, so daß sich der Strang gegen den Preßdruck an ihnen abstützt. Läßt der Druck im Krafterzeuger nach bzw. wird er durch den ansteigenden Preßdruck überwunden, so können sich wegen der Rollenlagerung 4 die Wandabschnitte 3 zusammen mit dem Strang vorwärts, d. h. in der Zeichenebene nach rechts bewegen.

Nach beendetem Hub wird der Anpreßdruck der Spannelemente 5 aufgehoben durch Druckentfernung bzw.- umkehr in den Anpreßzylinder 6. Sodann werden die Wandabschnitte 3 durch den Krafterzeuger 8 wieder nach links in ihre Ausgangsstellung zurückgezogen. Wie bereits erwähnt, läßt sich der Druck im Krafterzeuger und damit die auf die Wandabschnitte übertragene Kraft so steuern, daß ein gewünschter Sollwert des Preßdrucks und damit eine gewünschte Dichte der stranggepreßten Körper erreicht wird.

Im Rahmen der Erfindung können auch mehrere solcher erfindungsgemäß ausgebildeten, einander gegenüber angeordneter Wandabschnitte längs eines Stranges nacheinander vorgesehen sein.

## Stückliste

1 Aushärtekanal
2 Austrittsöffnung der Strangpreßdüse
3 Wandabschnitt
4 Rolle
5 Spannelement
6 hydraulischer Zylinder
7 Ständer
8 Kolbenstange
9 Krafterzeuger

## Ansprüche

1. Vorrichtung zum Aushärten stranggepreßter Körper aus vornehmlich pflanzlichen, mit einem Bindemittel gemischten Material, z. B. Abfallprodukte der Holzindustrie, bestehend aus einem beheizbaren, im Anschluß an eine Strangpreßdüse einer Kolbenstrangpresse angeordneten, dem Düsenquerschnitt anpaßbaren und aus mehreren, sich nicht berührenden Wandabschnitten gebildeten Aushärtekanal (1), wobei mindestens zwei an gegenüberliegenden Seiten des Stranges angeordnete Wandabschnitte (3) quer zur Strangvorschubrichtung mittels Spannelementen (5) oder dgl. bewegbar und von beiden Seiten her gegen den Strang anpreßbar sind, dadurch gekennzeichnet, daß die Wandabschnitte (3) in und gegen Vorschubrichtung beweglich geführt sind, und daß an ihnen je ein Krafterzeuger (9) angreift, der eine dem Preßhub entgegengerichtete Kraft auf die während des Preßhubs angepreßten Wandabschnitte (3) überträgt, wobei die Kraft des Krafterzeugers (9) steuerbar ist in Abhängigkeit vom Druck in der Strangpresse.

2. Vorrichtung nach Anspruch 1, dadurch gekennzeichnet, daß vier jeweils einander gegenüberliegende, in und gegen Vorschubrichtung beweglich geführte und gegeneinander anpreßbare Wandabschnitte (3) rings um einen Strangquerschnitt angeordnet sind.

3. Vorrichtung nach Anspruch 1 oder 2, dadurch gekennzeichnet, daß die Wandabschnitte (3) über eine Rollenlagerung (4) an den Spannelementen (5) abgestützt sind.

## Claims

1. A device for hardening extruded bodies of mainly vegetable material, e. g. waste products of the wood industry, mixed with a binder, consisting of a heatable hardening channel (1) formed from several non-touching wall portions disposed at the outlet end of an extrusion die of a piston extrusion press and adaptable to the die cross-section, at least two wall portions (3) disposed on opposing sides of the extrusion being movable transversely to the extrusion feed direction by means of stressing elements (5) or the like, and being pressable against the extrusion from both sides, characterised in that the wall portions (3) are guided in and against the feed direction, and against each of them there acts a force producer (9) which transmits a force, against the direction of the pressing stroke, to those wall portions (3) which are pressed during the pressing stroke, the force of the force producer (9) being controllable as a function of the pressure in the extrusion press.

2. A device as claimed in claim 1, characterised in that four respective mutually opposing wall portions (3) guided movably in and against the feed direction and pressable against each other are disposed completely about an extrusion cross-section.

3. A device as claimed in claim 1 or 2, characterised in that the wall portions (3) are supported on the stressing elements (5) by way of a roller bearing (4).

## Revendications

1. Dispositif pour durcir des corps extrudés, principalement en matière végétale mélangée à un agent liant, par exemple des déchets de l'industrie du bois, constitué d'un canal pour le durcissement (1), qui peut être chauffé, qui est disposé à la suite de la filière d'une extrudeuse à piston, qui peut être adapté à la section droite de la filière et qui est constitué de plusieurs sections de parois non contiguës, au moins deux sections de parois (3) disposées sur des côtés opposés de l'extrudeuse pouvant être déplacées transversalement au sens d'avance de l'extrusion au moyen d'éléments de serrage (5) ou d'éléments semblables et pouvant être pressées des deux côtés contre le boudin, caractérisé en ce que les sections de parois (3) sont guidées de manière mobile dans le sens d'avance et dans le sens opposé et en ce que chacune d'entre elles est attaquée par un générateur de force (9), qui transmet une force de sens opposé à la course de l'extrudeuse aux sections de parois (3) pressées pendant la course de l'extrudeuse, la force du générateur de force (9) pouvant être commandée en fonction de la pression régnant dans l'extrudeuse.

2. Dispositif suivant la revendication 1, caractérisé en ce que quatre sections de parois (3), opposées les unes aux autres respectivement, guidées de manière mobile dans le sens d'avance et en sens opposé et pouvant être pressées l'une contre l'autre, sont disposées tout autour d'une section droite du boudin.

3. Dispositif suivant la revendication 1 ou 2, caractérisé en ce que les sections de parois (3) sont appuyées sur les éléments de serrage par l'intermédiaire d'un palier à rouleau (4).